(19) Europäisches Patentamt
European Patent Office
Office européen des brevets

(11) Publication number: 0 232 019 A2

# (12) EUROPEAN PATENT APPLICATION

(21) Application number: 87300260.4

(22) Date of filing: 13.01.87

(51) Int.Cl.[3]: C 08 G 61/12

(30) Priority: 28.01.86 GB 8601994

(43) Date of publication of application: 12.08.87 Bulletin 87/33

(84) Designated Contracting States: AT BE CH DE FR GB IT LI LU NL SE

(71) Applicant: IMPERIAL CHEMICAL INDUSTRIES PLC
Imperial Chemical House Millbank
London SW1P 3JF(GB)

(72) Inventor: Daniels, James Anthony
20A Kingsley Road
Frodsham Cheshire, WA6 6SG(GB)

(74) Representative: Chapman, Kenneth Hazel et al,
Imperial Chemical Industries PLC Legal Department: Patents P.O. Box 6 Bessemer Road
Welwyn Garden City Herts, AL71HD(GB)

## (54) Aromatic Polymer.

(57) A polymer contains repeating units

I —PhCOPhPh— and

II —$PhSO_2Ph$—

(Where Ph is para-phenylene) linked together by ether linkages, and has a relatively higher molecular weight corresponding to an inherent viscosity of at least 0.4. Preferred polymers contain 65-85 mole % of units I relative to the total of I and II and are characterised by inter alia high solvent resistance, glass transition temperature over 200°C and melting temperature below 400°C. Processes for making the polymers and composite containing them are also provided.

EP 0 232 019 A2

./...

Fig.3.

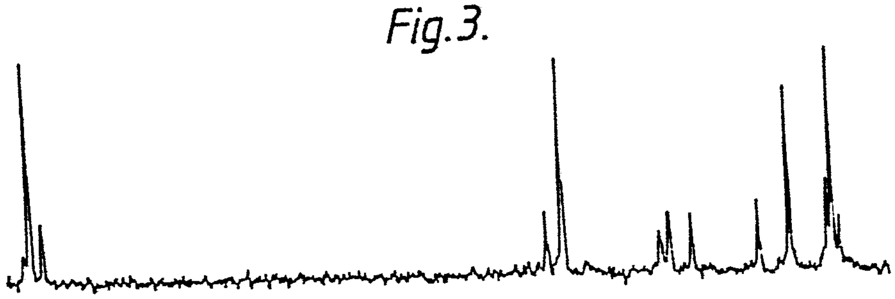

Fig.4.

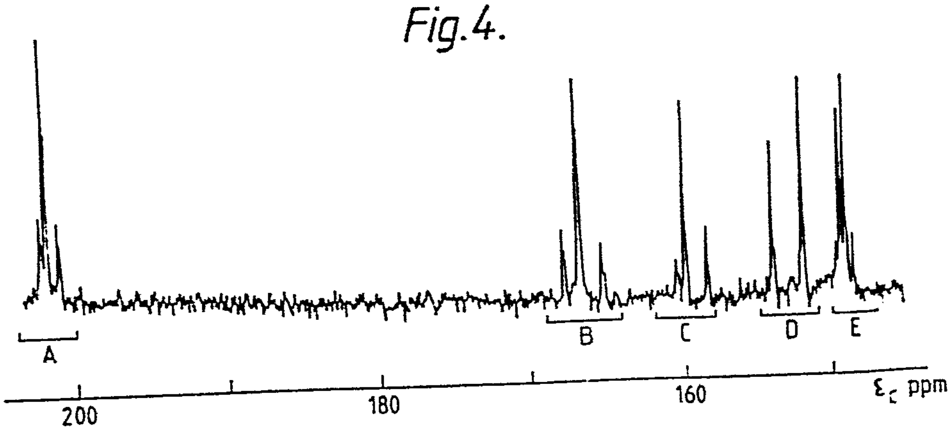

H33740 EP
0232019

Aromatic Polymer

The present invention relates to aromatic polymers, composite materials based on such polymers and the production of such polymers.

In many commercially available polymers of this type, aromatic rings are linked together by atoms or groups such as oxygen (ether), sulphur, sulphone, ketone or alkylene. Those containing ether and sulphone, and optionally alkylene, linkages are generally amorphous with a high glass transition temperature, for example over 200°C, in some cases at least 250°C. However, being amorphous, they are vulnerable to attack by a range of solvents, including hydrocarbon liquids.

In contrast, polymers containing ether and ketone linkages are generally crystalline or crystallisable and, in crystalline form, are resistant to attack by many chemical environments. They generally have a high melting temperature, typically at least 300°C, possibly over 400°C. However, the glass transition temperature of many polymers of this type is typically below 200°C and may be in the range 140°C to 160°C. Since an appreciable proportion of their mechanical strength is lost at temperatures around the glass transition temperature, these polymers are not suitable for applications which require the retention of mechanical properties such as modulus at temperatures of 180°C or higher. If the polymer structure is modified in an attempt to increase the glass transition temperature, any such increase is usually accompanied by an increase in the melting temperature. Since, to avoid degradation, the polymer processing temperature is preferably at most 450°C, especially up to 430°C, the melting temperature of the polymer is preferably below 420°C, more preferably below 400°C. Few polymers possess a glass transition temperature of 180°C or above together with a melting temperature below 420°C.

In the ensuing description the following abbreviations will be used:

DSC differential scanning calorimetry;

Tm melting point, the temperature at which the melting endotherm is observed;

Tc temperature at which crystallisation occurs on cooling the

melt before or after solidification.

Tg glass transition temperature

IV inherent viscosity, as measured at 30°C on a solution of 0.1g of polymer in 100 $cm^3$ of solution in sulphuric acid of density 1.84 $g/cm^3$.

RV reduced viscosity, as measured at 30°C on a solution of 1.0g of polymer in 100 $cm^3$ of solution in sulphuric acid of density 1.84$g/cm^3$ (In the IV range 0.3 to 1.0, IV = 0.78 RV).

The determination of Tg by DSC is carried out by examining a 20 mg sample of polymer in a Mettler TA 3000 DSC instrument, using heating and cooling rates of 20°C/minute under nitrogen. From the resulting cooling curve Tg is obtained as the intercept of two straight lines drawn as tangents at the break in the cooling curve.

According to the invention a polymer contains repeating units

I - PhCOPhPh - and

II - $PhSO_2Ph$ -

(where Ph is para-phenylene) linked by ether linkages, and has an inherent viscosity of at least 0.4.

Preferred polymers have IV at least 0.6, especially at least 0.7, for example at least 0.8. In general IV is not more than 2.5, particularly not more than 2.0, and preferably does not exceed 1.5. For ease of processing, IV is in the range 0.6 to 0.7, and this may increase to at least 0.7 during processing.

The polymers preferably contain at least 65 mole % of unit I relative to the total of units I and II. The proportion of units I preferably does not exceed 85 mole % and more preferably does not exceed 80 mole %. Polymers containing at least 72 mole % of units I are preferred, 75 to 80 mole % particularly preferred and 76 to 80 mole % especially preferred; preferably these have chlorine chain ends. However, certain polymers containing 65 to 72 mole % of units I also have a useful combination of properties; preferably these have fluorine chain ends. The polymers of the invention typically consist essentially of units I and II, that is, with at most 20% of other units.

Preferred polymers are characterised by one or more of (i) being crystalline; (ii) being tough when formed into a film by

compression moulding; (iii) being resistant to a wide range of solvents, in particular being, on immersion for 24 hours in methylene chloride ($CH_2Cl_2$) at 20°C, "essentially unaffected", that is, gaining not more than 10% by weight; and (iv) having a glass transition temperature over 200°C and a melting temperature below 400°C, particularly below 390°C and especially below 380°C. Thus these polymers are particularly useful for applications which require resistance to solvents and to high temperatures.

Polymers consisting of units I and II are broadly disclosed in US-A-4036815 and also in US-A-3940428 and US-A-3764583. However, those exemplified all have RV less than 0.5, that is, IV less than 0.39, indeed an RV not over 0.42 (IV not over 0.33). Furthermore, copolymers containing more than 75 mole % of the units I are not described. Compression moulded films formed from the polymers of US-A 4036815 are stated to be brittle if they contain 33% or more of unit I. No information is given regarding the Tg of these copolymers. It is not suggested that polymers containing units I and II and having ether linkages would possess the useful combination of properties of the polymers of the present invention. In particular, US-A- 4036815 does not indicate that polymers containing 65 to 72 mole % of units I would have useful properties or that polymers containing more than 75 mole % of units I would have a particularly useful combination of properties.

Polymers in accordance with the invention can be melt processed into shaped articles, including films and insulating coatings on electrical conductors. They can be used in applications for which polyethersulphones and/or polyaryletherketones have been proposed previously. In particular they may be used for bearings or bearing liners or for those applications which require a combination of one or more of good electrical insulating properties, good resistance to a wide range of chemicals, retention of mechanical properties up to high temperature, good resistance to burning and the emission of low proportions of toxic fumes and with low smoke density on burning.

Whilst for many applications the polymers of the invention may be used with few if any additives, other than stabilisers, one or

more additives may be incorporated to produce a range of polymer compositions.

Thus in a further aspect the invention provides a polymer composition comprising such polymer together with at least one additive.

The at least one additive may be any previously proposed for polyarylethers containing sulphone and/or ketone linkages, for example inorganic and organic fibrous fillers such as of glass, carbon or poly-paraphenylene terephthalamide; organic and inorganic fillers such polytetrafluorethylene, graphite, boron nitride, mica, talc and vermiculite; nucleating agents; and stabilisers such as phosphates and combinations thereof.

Preferably the total proportion of additives is at least 0.1%, and at most 80%, especially at most 70%, by weight of the total composition. The composition can contain for example 5 to 30% by weight of boron nitride; or at least 20% by weight of short glass or carbon fibre; or 50 to 70%, especially about 60%, by volume of continuous glass or carbon fibre; or a mixture of a fluorine-containing polymer, graphite and an organic or inorganic fibrous filler and the total proportion of these additives is preferably 20 to 50% by weight of the total composition.

The composition may be made by mixing the polymer with the additives for example by particle or melt blending. More specifically the polymeric material, in the form of dry powder or granules, can be mixed with the additives using a technique such as tumble blending or high speed mixing. The blend thus obtained may be extruded into a lace which is chopped to give granules. The granules can be subjected to a forming operation, for example injection moulding or extrusion, to give a shaped article.

Alternatively the composition may be film, foil or powder/granules of the polymer with or without particulate additives, laminated with a fibrous filler in the form of mats or cloths.

Alternatively a composition containing fibrous filler may be obtained by passing essentially continuous fibre, for example glass or carbon fibre, through molten polymer or a mixture containing it. The product obtained is a fibre coated with polymer and the

coated fibre may be used alone, or together with other materials, for example a further quantity of the polymer, to form a shaped article. The production of compositions by this technique is described in more detail in EP-A 56703, 102158 and 102159.

In the production of shaped articles from the polymers of the invention, or from polymer compositions containing them, desirably the crystallinity of the polymer is developed as far as possible during the fabrication process, including any annealing stage, because in subsequent use an article which can continue to crystallise can suffer dimensional changes, warping or cracking and general change in physical properties. Furthermore, increased crystallinity results in improved environmental resistance.

To achieve improved crystallisation behaviour, the polymers of the invention may be modified by forming, on the polymeric chains, terminal ionic groups - A - X, where A is an anion and X is a metal cation. The production of such modified polymers is described in more detail in our EP-A 152161.

The anion is preferably selected from sulphonate, carboxylate, sulphinate, phosphonate, phosphate, phenate and thiophenate and the metal cation is an alkali metal or alkaline earth metal.

By such modification the temperature Tc for the onset of crystallisation, may be raised by at least 2°C in comparison with a similar polymer not containing the ionic end-groups. However, useful polymers are obtained even when there is little or no change in Tc if sufficient nucleation results from the presence of end groups to increase the number of spherulites in comparison with a similar composition not containing the ionic end groups.

Such modified polymers are most suitably produced by reaction of a preformed polymer with reactive species containing the ionic group. Typically a polymer which already contains an end group which can be displaced by a nucleophilic reagent is reacted with a species containing a reactive nucleophilic group and the group - A -X. For example, if the polymer has a terminal group selected from fluoro, chloro and nitro the reactive species contains a nucleophilic group such as a phenate or thiophenate or a group of formula - A -X.

Alternatively the preformed polymer may contain a terminal nucleophilic group and the ionic ended polymer may be formed by reaction of this group with a low molecular weight compound carrying a group which can be displaced by a nucleophilic reagent, such as chloro, fluoro or nitro and - A - X. It will be appreciated that a polymer having a terminal nucleophilic group can be readily derived from a polymer carrying a terminal group displaceable by a nucleophilic reagent. For example a fluorine ended polymer can be reacted with the low molecular weight compound carrying a fluoro, chloro or nitro group and - A - X in the presence of a base which will replace the fluorine end group to give a nucleophilic end group.

In a further procedure a polymer, regardless of the nature of its end-groups, preferably of high number average molecular weight, for example greater than about 10,000, is melted in the presence of a species having a nucleophilic group and a - A - X group under conditions which cause scission of the polymer chain. The conditions which cause scission are enhanced if the reaction is done at high temperature or in the environment of a solution rather than a melt but are primarily affected by the nature of the polymer chain. Whilst it is preferred to use polymers of high molecular weight so that the product of chain scission still has useful properties, we have found that low molecular weight products containing the terminal ionic groups are useful since they can influence the crystallisation behaviour of high molecular weight polymers which do not contain terminal ionic groups.

Modified polymers containing terminal ionic groups may be used alone or in a blend with unmodified polymers to form shaped articles. Such modified polymer or blend may also be used with one or more additives as hereinbefore described.

The polymers of the invention can be prepared by a nucleophilic polycondensation process improved as compared with that of US-A-4036815. According to US-A-4036815 a polymer is prepared using bis-[4-(4-chlorobenzoyl) biphenylyl] carbonate and the potassium salt of 4-(4-chlorophenylsulphone) phenol in the presence of potassium hydroxide, and during the preparation that carbonate undergoes hydrolysis and conversion to the alkali metal salt of a halophenol of

the structure

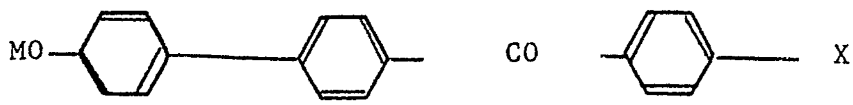

where M is an alkali metal and X is halogen; polycondensation of the salts of the halophenols then occurs. However, the polymers obtained are of low molecular weight (RV 0.42 or lower).

According to a first process aspect of the invention a process for the preparation of a polymer comprises polycondensing, under substantially anhydrous conditions, at least one compound

$$Y^1PhCOPhPhY^2$$

with at least one compound

$$Y^3PhSO_2PhY^4$$

and/or a polyarylethersulphone having repeating units

$$- PhSO_2Ph -$$

in which polyarylethersulphone the repeating units are linked by ether linkages

where

Ph is para-phenylene and

$Y^1$, $Y^2$, and, when present, $Y^3$ and $Y^4$ are each, independently, halogen or -OH, and are such that halogen and -OH are in substantially equimolar amounts,

at a temperature in the range 150 to 400°C, at least the last stage of the polycondensation being at 300°C or over, in the presence of at least one alkali metal hydroxide, carbonate or bicarbonate in a stoichiometric amount or up to 25% excess with respect to the phenolic groups in the compounds $Y^1PhCOPhPhY^2$ and $Y^3PhSO_2PhY^4$ and the repeat units $-PhSO_2Ph-$ of the polyarylethersulphone.

Typically $Y^1$ is halogen and $Y^2$ is -OH. In compound $Y^3PhSO_2PhY^4$, $Y^3$ and $Y^4$ can respectively halogen and OH if desired; alternatively essentially equimolar proportions of the bis-halide ($Y^3$=$Y^4$ = halogen) and the bis-phenol ($Y^3$=$Y^4$ = OH) can be used. However, we prefer groups $Y^3$ and $Y^4$ to be halogen and -OH respectively.

The halogen can be bromine, chlorine or fluorine, particularly chlorine or fluorine. We have found that the nature of the polymer obtained is influenced by which halogen is present. Thus, using carbon-13 Nuclear Magnetic Resonance (hereafter simply "NMR"), the product obtained when $Y^1$ is fluorine and $Y^2$ is -OH has a different NMR spectrum from that of the product obtained when $Y^1$ is chlorine and $Y^2$ is -OH. This effect in polymers containing 77.6 mole % of units I and correspondingly 22.4 mole % of units II is illustrated in the accompanying drawings, in which:

Figure 1 is the NMR spectrum obtained from a polymer (Example 24) produced using 4- (4-fluorobenzoyl)-4'-hydroxy-biphenyl;

Figure 2 is the NMR spectrum obtained from a polymer (Example 8) produced using 4-(4-chlorobenzoyl)-4'-hydroxybiphenyl;

Figure 3 is an expanded partial spectrum showing the chemical shift range 145 ppm to 205 ppm of Figure 1; and

Figure 4 is an expanded partial spectrum showing the chemical shift range 145 ppm to 205 ppm of the spectrum of Figure 2.

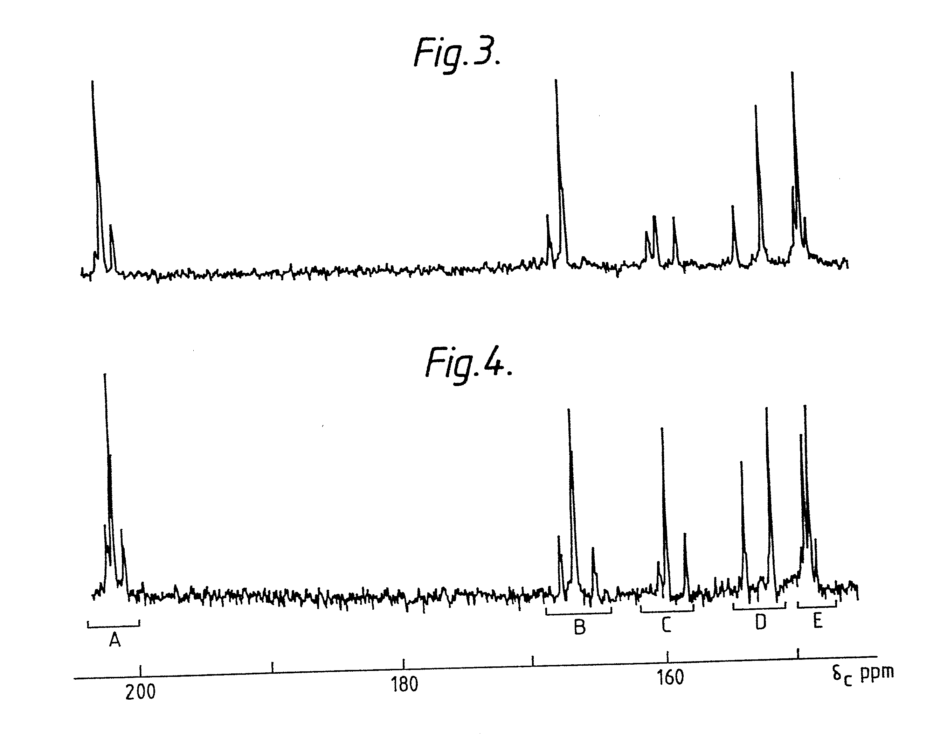

It will be seen, in particular comparing Figures 3 and 4, that the relative heights of the resonances in the regions A (chemical shift 200 to 204 ppm), B (chemical shift 164 to 169 ppm), C (chemical shift 158 to 162 ppm), D (chemical shift 151 to 155 ppm) and E (chemical shift 147 to 150 ppm), are different. These differences indicate that the same structures are present but in different relative proportions. Similar effects were observed in the spectra, of polymers in which the percentages of units I and II were different from those of Examples 8 and 24. It is believed that the different relative proportions of the structures, corresponding to NMR spectra, are caused by rearrangements which are catalysed to different degrees depending on which halogen is present. Polymers having an NMR spectrum similar to that shown in Figures 2 and 4 are generally preferred.

In preparing the polymers of the invention, "substantially equimolar amounts of halogen and -OH" includes a slight excess of either for example up to 5% mole, especially up to 2% mole; in particular, a excess of halogen may be used to obtain the most stable polymer.

The compound $Y^1$ PhCOPhPh$Y^2$ is preferably 4-(4-chlorobenzoyl)-4' - hydroxybiphenyl. The compound $Y^3PhSO_2PhY^4$ is preferably 4-chloro-4' - hydroxydiphenylsulphone but an essentially equimolar mixture of 4,4' - dichlorodiphenylsulphone and 4,4' - dihydroxydiphenylsulphone may be used. If a polyarylethersulphone (as defined) is used, we have found that the magnitude of its RV and the nature of its chain end groups appear not to substantially affect the properties of the polymer obtained.

The molecular weight of the polymer obtained can be controlled by using an excess quantity of halogen or -OH as above-mentioned, and alternatively or additionally by including in the reaction mixture a small proportion, for example less than 5% mole, and especially less than 2% mole relatively to the monomers and/or the polyarylethersulphone, of a monofunctional compound such as a phenol or, preferably, an activated arylmonohalide.

The polycondensation reaction may be carried out in the presence or absence of a solvent.

Preferably a solvent is employed and is an aliphatic or aromatic sulphoxide or sulphone of the formula

$$R-SO_a-R'$$

where

a is 1 or 2; and

R and R', which may be the same or different, are alkyl or aryl groups, and may together form a divalent radical.

Solvents of this type include dimethyl sulphoxide, dimethyl sulphone, and sulpholane (1,1-dioxothiolan) but the preferred solvents are aromatic sulphones of the formula

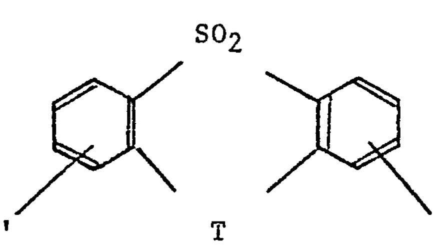

where T is a direct link, oxygen or two hydrogens (one attached

to each benzene ring); and

Z and Z', which may be the same or different, are hydrogen or alkyl, alkaryl, aralkyl or aryl groups.

Examples of such aromatic sulphones include diphenylsulphone, ditolylsulphone, dibenzothiophen dioxide, phenoxathiin dioxide and 4-phenylsulphonyl biphenyl. Diphenylsulphone is preferred. Other solvents that may be used include N,N-dimethyl formamide and N-methyl-2-pyrrolidone.

In the polycondensation reaction mixture, if an alkali metal hydroxide is used, this is preferably pre-reacted with the halophenol or bisphenol. The resulting phenate should preferably be in a finely divided form, for example having a particle size of less than 1.0 preferably less than 0.5 mm. The phenate is conveniently formed in aqueous or methanolic solution and, since the polycondensation should be effected in the essential absence of -OH containing compounds such as water and alcohols, it is necessary to remove such compounds prior to effecting the polycondensation. Thus the halophenol or bisphenol may be stirred in a solution of alkali metal hydroxide in water or a 90:10 by volume mixture of methanol and water, preferably in the ratio of 1 mole of phenol groups to at least one mole of hydroxide, until it has dissolved; then the solvent may be evaporated off, for example by spray drying. Any hydrated phenate obtained is preferably dehydrated for example by evaporation under reduced pressure, or by heating, preferably in the presence of a diaryl sulphone, at above 150°C, preferably above 200°C and preferably under partial vacuum, e.g. 25 to 400 torr. A particular advantage in dehydration of the phenate in the presence of a diaryl sulphone in the polycondensation vessel is that, because the diaryl sulphone does not boil, there is no splashing of the phenate on the walls of the reaction vessel and hence stoichiometry of the polycondensation reaction is maintained. Any dihalo-benzenoid monomers to be used in the polycondensation can be added after evolution of water has ceased, for example as indicated by cessation of foaming. After removal of the water, and addition of any necessary dihalo-benzenoid monomers and/or additional base, the temperature is increased to the polycondensation temperature.

If the base is an alkali metal carbonate added as such or as

bicarbonate, whether for the whole base requirement or as an addition to the phenate, it is preferably anhydrous. However, if hydrated it may be dehydrated during heating up to the polycondensation temperature if that temperature is high enough.

The base is desirably used in a finely divided form since we have found that with coarse materials the product obtained may have a lower IV. For example using sodium carbonate as particles all below 0.261 mm (as determined using a Malvern 3300 Laser Particle Sizer), a polymer product of IV over 0.7 was obtained, whereas with (at least 50% by weight of the particles over 0.376 mm the IV was less than 0.7.

In order to achieve a satisfactory molecular weight the alkali metal hydroxide, carbonate or bicarbonate should be used preferably in excess over the stoichiometric proportion, the excess being particularly in the range 1 to 15%, for example 6%, molar.

It is preferred to use an alkali metal bicarbonate. Surprisingly, polymers of satisfactory molecular weight are obtained more readily using sodium bicarbonate. Where polycondensation in presence of bicarbonate is mentioned, it will be appreciated that the alkali is introduced into the reaction mixture as bicarbonate which decomposes to carbonate before polycondensation temperature is reached. Carbonate derived in situ from bicarbonate appears to be in a highly suitable physical form.

According to a second process aspect of the invention a process for the preparation of a polymer comprises polycondensing, under substantially anhydrous conditions, at least one compound

$Y^1PhCOPhPhY^2$

with at least one compound

$Y^3PhSO_2PhY^4$

and/or with a polyarylethersulphone having repeating units

$-PhSO_2Ph-$

in which polyarylethersulphone the repeating units are linked by ether linkages

where

Ph is para-phenylene and

$Y^1$, $Y^2$ and, when present, $Y^3$ and $Y^4$ are each, independently, halogen or -OH,

in the presence of at least one alkali metal hydroxide, carbonate or bicarbonate in a stoichiometric amount or up to 25% excess with respect to the phenolic groups in the compounds $Y^1PhCOPhPhY^2$ and $Y^3PhSO_2PhY^4$ and the repeat units $-PhSO_2Ph-$ of the polyarylethersulphone and in the additional presence of a copper containing catalyst.

The copper is preferably not more than 1%, preferably less than 0.4%, but desirably at least 0.01%, molar with respect to the monomers. A wide range of materials may be used, cupric and cuprous compounds and also metallic copper and suitable alloys being usable to introduce the copper containing catalyst. Preferred copper compounds are essentially anhydrous and include cuprous chloride, cupric chloride, cupric acetylacetonate, cuprous acetate, cupric hydroxide, cupric oxide, basic cupric carbonate, basic cupric chloride and particularly cuprous oxide. This procedure is described in more detail in our EP-A 182648 published 28 May 1986 which takes priority from British application 8429609 filed 23 November 1984 and is entitled "Polyketone". The stoichiometric excess of the alkali metal hydroxide, carbonate or bicarbonate is calculated after allowing for reaction with the copper compound if it is a salt of a strong acid and disregards any basicity of the copper compound.

If the polycondensation is effected in the presence of a copper containing catalyst, removal of copper residues from the polymer at the completion of the polymerisation is very desirable. Especially if the polymer has been efficiently end-capped, for example with 4,4' -dichlorodiphenylsulphone, the residues may be removed using a complexing agent such as ethylenediamine tetraacetic acid and thereafter washing the polymer with water or a mixture of water and methanol.

The polycondensation reaction is carried out at least 150°C, preferably in the range 250°C to 400°C, particularly 280°C to 350°C. An increase in reaction temperatures leads to shorter reaction times but with risk of product decomposition and/or side reactions whereas a decrease in reaction temperature leads to longer reaction times but less product decomposition. However a temperature should be used which maintains the polymer in solution. In general the solubility of

polymer in the polycondensation solvent, for example a diaryl sulphone, increases with temperature. Solubility also increases with increasing proportion of sulphone groups in the polymer chain, hence polymers having a higher proportion of sulphone groups can, if desired, be produced at slightly lower polymerisation temperatures.

In order to obtain products of improved properties, it may be advantageous to use a prepolycondensation stage in which the monomers are heated together at a temperature at which some oligocondensation occurs but little, if any, polycondensation occurs. Such prepolycondensation can be effected at 200°C to 250°C, particularly 220°C to 245°C. The prepolycondensation is believed to result in the formation of relatively involatile oligomers and hence to reduce the possibility of volatile monomers being removed from the reaction mixture.

The polycondensation is preferably carried out in an inert atmosphere, for example argon or nitrogen. The reaction vessel can be made from glass but for operation on a large scale is preferably made from stainless steels (other than those which undergo surface crazing at the reaction temperatures in the presence of alkali metal halide), or made of, or lined with, titanium, nickel or an alloy thereof or some similarly inert material.

To neutralise any reactive oxygen-containing anions, a reagent therefor may be introduced into the polycondensation reaction. Reactive monofunctional halides, for example methyl chloride, and reactive aromatic halides such as, for example, 4,4'-dichlorodiphenylsulphone, 4,4' -dichloro-benzophenone, 4-chlorodiphenylsulphone or 4-chloro-benzophenone are particularly suitable.

At the completion of polycondensation, the reaction mixture may be (i) allowed to cool and, depending on the polycondensation solvent, to solidify, (ii) ground, (iii) treated to remove any polymerisation solvent, for example by extraction with a solvent therefor, conveniently a mixture of acetone or an alcohol for example methanol, with water, and finally (iv) dried. Additionally, the polymer may be treated to remove copper residues.

According to a third process aspect of the invention a

process for the preparation of a polymer comprises polycondensing, under substantially anhydrous conditions, at least one compound formula

$Y^1PhCOPhPhY^2$

with at least one compound

$Y^3PhSO_2PhY^4$

and/or with a polyarylethersulphone having repeating units

$-PhSO_2Ph-$

in which polyarylethersulphone the repeating units are linked by ether linkages

where

Ph is para-phenylene and

$Y^1$, $Y^2$, and, when present, $Y^3$ and $Y^4$ are each, independently, a halogen atom or a group -OH,

in the presence of at least one alkali metal hydroxide, carbonate or bicarbonate in a stoichimetric amount or up to 25% excess with respect to the phenolic groups in the compounds $Y^1PhCOPhPhY^2$ and $Y^3PhSO_2PhY^4$ and the repeat units $-PhSO_2Ph-$ of the polyarylethersulphone, said polycondensation being carried out in a first stage at such a temperature in the range 150-400°C for such a time and with such molecular weight control by non-stoichiometric reactants that an intermediate polymer of low or moderate molecular weight is produced and thereafter in one or more subsequent stages in which the molecular weight is increased to a desired level.

In one form of this third process aspect the molecular weight of the intermediate polymer corresponds to an IV in the range 0.4 to 0.6 and is increased to a level corresponding to an IV of at least 0.7. In a second form of the third process aspect the molecular weight of the intermediate polymer corresponds to an IV in the range 0.3 to 0.5 and is increased to a level over 0.6, especially over 0.7.

The second and/or any subsequent stages are carried out preferably during or after shaping of the intermediate polymer. More specifically, the molecular weight of the intermediate polymer is increased by providing a mixture of (1) at least one such intermediate polymer having end groups selected from groups of formula $-Ar-X^1$ and

-Ar-OD

where Ar is arylene, preferably phenylene;

$X^1$ is a monovalent radical capable of nucleophilic displacement from Ar, preferably selected from halogen, nitrile (CN) or nitro ($NO_2$) radicals; and

D is a univalent metal

and 2) a reagent having nucleophilic activity selected from a) alkaline salts of Group I and Group II metals and b) reagents having radicals $-X^1$ and -OD, reactive respectively with the end groups -Ar -OD and -Ar $-X^1$, wherein (i) when the end group is -Ar $-X^1$ the reagent is difunctional having either both end groups -OD or one -OD group and one $-X^1$ group; and (ii) when the end group is -Ar-OD the reagent is difunctional having both end groups $-X^1$, and heating the mixture to a temperature above the melting point of the polymer until a desired increase in molecular weight has occurred. This procedure is described in more detail in EP-A 125816. Particularly it can be used in the production of composites or in powder coating or rotational moulding.

When the toughness of the polymers is to be determined, the test used consists in compression - moulding a film about 0.2 mm thick from a sample of the polymer at a temperature at least 40°C above the polymer melting point in a press (4400 $MN/m^2$ for 5 minutes), then either cooling the film slowly to induce complete crystallisation or else quench cooling and annealing it to induce the requisite crystallisation. The film is flexed through 180° to form a crease, whereby the two faces of the film formed about the crease touch. The film is compressed manually to form the crease line. If the film survives this treatment without breaking (eg snapping or tearing) it is deemed to be tough; if it fails on the formation of the crease, it is deemed to be brittle and if it fails during the test it is regarded as moderately tough.

The invention is illustrated by the following examples.

Example 1

4.0g (1.295 x $10^{-2}$ mole) of 4-(4-chlorobenzoyl) - 4'-hydroxybiphenyl (77.6 mol %), 1.0g (0.373 x $10^{-2}$ mole) of 4-chloro-4'-hydroxydiphenylsulphone (22.4 mol %), 0.08 g (0.028 x $10^{-2}$

mol) of 4,4'-dichlorodiphenylsulphone, 1.487g ($1.77 \times 10^{-2}$ mole) sodium bicarbonate and 20g of diphenyl sulphone were mixed in a 100 $cm^3$ glass reaction tube equipped with a stirrer, nitrogen inlet and air condenser. The tube was purged with nitrogen whilst rotating it. The stirrer ensured that the contents of the tube were thoroughly mixed. The tube and its contents were heated to 200°C and maintained at that temperature for 15 minutes. The temperature was then increased to 320°C and maintained at 320°C for 2½ hours under nitrogen with constant stirring. After this time the melt was cooled to give a fawn coloured "toffee" of diphenylsulphone, polymer and unreacted monomers.

The toffee was broken into pieces which were then ground to a fine powder in a hammer mill containing a 1.0 mm sieve screen. The resulting powder was extracted in a soxhlet apparatus with acetone for one hour to remove diphenyl sulphone solvent. The powder was then further extracted by refluxing with water for 30 minutes to remove sodium chloride then with methanol for 30 minutes to remove any traces of unreacted monomers. The remaining solid was dried at 130°C and a pressure of 40 $KN/m^2$ for 16 hours.

The product, a creamy-white polymer, was obtained in greater than 96% yield. Its IV was 1.03, indicating a high molecular weight.

A DSC study showed Tm 369°C, Tg 212°C and crystallisation temperature from the melt (Tc) 295°C.

Powdered polymer compression moulded at 410°C for 3 minutes with a pressure of 4400 $MN/m^2$, then slowly cooled, gave a tough opaque straw coloured film.

Samples of the film immersed in methylene chloride ($CH_2Cl_2$) at 20°C for 24 hours showed a weight increase of 8%. No visible effect of attack by methylene chloride was evident and the film remained tough.

Example 2

The procedure described in Example 1 was repeated using 1.40g ($1.668 \times 10^{-2}$ mole) of sodium bicarbonate, that is, a stoichiometric amount with respect to the monomers. A cream coloured polymer was obtained in greater than 95% yield based on the monomers. The polymer had an IV of 0.65. A film formed from the polymer by compression

moulding was fawn coloured but brittle and crumbled to a powder.

Example 3

The procedure described in Example 1 was repeated using 0.938 g (0.885 x $10^{-2}$ mole) of sodium carbonate instead of sodium bicarbonate. The sodium carbonate had a particle size of below 0.261 mm, with more than 60% by weight having a particle size between 0.084 and 0.261 mm and more than 80% by weight between 0.05 and 0.261 mm Particle sizes were measured using a Malvern 3300 Laser Particle Sizer.

A cream coloured polymer was obtained in greater than 95% yield based on the monomers. The polymer had an IV of 0.90. A film formed from the polymer by compression moulding at 410°C then cooling was, tough opaque and light brown coloured.

Example 4

The procedure described in Example 3 was repeated using a coarser sample of sodium carbonate. At least 50% by weight of this material had a particle size of greater than 0.376 mm, with more than 80% by weight greater than 0.167 mm. Particle sizes were measured using a Malvern 3300 Laser Particle Sizer. The polymer obtained had an IV of only 0.29 and could not be formed into a film by compression moulding at 400°C.

Example 5

The procedure described in Example 1 was repeated using 1.768 g (1.768 x $10^{-2}$ mole) of potassium bicarbonate instead of sodium bicarbonate.

A cream coloured polymer was obtained in greater than 95% yield based on the monomers. The polymer had an IV of 0.75. A film of the polymer obtained by compression moulding at 410°C was coloured light brown and was tough and opaque.

Example 6

4.0g (1.295 x $10^{-2}$ mole) of 4-(4-chlorobenzoyl)-4'-hydroxybiphenyl (77.6 mol %) and 1.0g (0.373 x $10^{-2}$ mole) of 4-chloro-4'-hydroxydiphenylsulphone (22.4 mole %) were dissolved in 25 $cm^3$ of a 0.708N sodium hydroxide solution in a 9:1 by volume methanol:water mixture (this solution contained 0.706g (1.768 x $10^{-2}$ mole) of sodium hydroxide), and 10 $cm^3$

of acetone at room temperature in a reaction tube. The solution was blown to dryness in a nitrogen stream whilst being heated at 80 to 100°C. A bright orange crystalline salt was obtained and this was dried for two hours at 120°C and a pressure of $25N/m^2$. 20.0 g of diphenyl sulphone and 0.085 ($0.0298x10^{-2}$ mole) 4,4'-dichlorodiphenylsulphone were added to the reaction tube. The polycondensation and work-up procedures were identical with those described in Example 1.

A fawn coloured polymer was obtained in greater than 95% yield based on the monomers. It had an IV of 0.37. In an attempt to produce a film of the polymer by compression moulding at 400°C the polymer crumbled to a powder.

Example 7

The procedure described in Example 6 was repeated using potassium hydroxide ($1.768 \times 10^{-2}$ mole) instead of sodium hydroxide and 20 $cm^3$ instead of 10$cm^3$ of acetone. After the removal of water, methanol and acetone a bright orange crystalline salt was obtained. The polycondensation and work-up procedures were identical with those of Example 1.

A fawn coloured polymer was obtained in greater than 95% yield based on the monomers. It had an IV of 0.43. In an attempt to produce a film by compression moulding at 400°C the polymer crumbled to a powder.

Example 8

The procedure described in Example 1 was repeated using 0.085 g ($0.034 \times 10^{-2}$ mole) of 4-chloro-diphenylsulphone instead of 4,4'-dichlorodiphenyl sulphone.

The creamy-white polymer was obtained in greater than 96% yield. Its IV was 0.85.

A DSC study of the polymer showed Tm 372°C, Tg 205°C and Tc 308°C. The polymer was then heated to 410°C and held for 15 minutes before cooling, the Tc and peak size were compared with the value previously noted. Very little difference was detected. Two further periods of heating at 410°C for 15 minutes were carried out to assess the melt stability of the polymer. After these further periods of heating Tc had fallen by only 5°C and Tm and Tg remained

unchanged.

Powdered polymer compression moulded at 410°C for 3 minutes with a pressure of 4400 $MN/m^2$, then slowly cooled, to give a tough opaque straw coloured film.

Samples of the film immersed in methylene chloride at 20°C for 24 hours showed increase in weight of 7.2%. No visible effect of attack by methylene chloride was evident and the film remained tough.

Examples 9 to 18

A series of copolymers, incorporating differing proportions of 4-(4-chlorobenzoyl)-4'-hydroxybiphenyl (A) and 4-chloro-4'-hydroxydiphenyl sulphone (B), were prepared by the procedure of Example 8. Table 1 lists the molar amounts of monomers used along with the amount of sodium bicarbonate. 4-chlorodiphenylsulphone was also added in an amount of 2.0 mol % based on monomers charged.

Table 1

| Example | Mole of A | Mole % A | Mole of B | Mole % B | Mole of $NaHCO_3$ |
|---|---|---|---|---|---|
| 9 | $1.409x10^{-2}$ | 85.3 | $0.242x10^{-2}$ | 14.7 | $1.750x10^{-2}$ |
| 10 | $1.387x10^{-2}$ | 83.8 | $0.268x10^{-2}$ | 16.2 | $1.754x10^{-2}$ |
| 11 | $1.356x10^{-2}$ | 81.8 | $0.302x10^{-2}$ | 18.2 | $1.757x10^{-2}$ |
| 12 | $1.330x10^{-2}$ | 79.9 | $0.335x10^{-2}$ | 20.1 | $1.760x10^{-2}$ |
| 13 | $1.272x10^{-2}$ | 76.1 | $0.399x10^{-2}$ | 23.9 | $1.772x10^{-2}$ |
| 14 | $1.258x10^{-2}$ | 75.2 | $0.415x10^{-2}$ | 24.8 | $1.778x10^{-2}$ |
| 15 | $1.230x10^{-2}$ | 73.3 | $0.447x10^{-2}$ | 26.7 | $1.779x10^{-2}$ |
| 16 | $1.218x10^{-2}$ | 72.3 | $0.466x10^{-2}$ | 27.7 | $1.780x10^{-2}$ |
| 17 | $1.183x10^{-2}$ | 70.2 | $0.503x10^{-2}$ | 29.8 | $1.790x10^{-2}$ |
| 18 | $1.134x10^{-2}$ | 66.9 | $0.560x10^{-2}$ | 33.1 | $1.797x10^{-2}$ |

The polycondensation conditions and procedure and work-up procedure were identical with those described in Example 1.

Table 2 shows the thermal properties, film characteristics and solvent uptake. The films produced in Examples 9 to 12 were compression moulded at 440°C whilst the films for Examples 13 to 18 were compression moulded at 410°C. The methylene chloride immersion data were obtained at 20°C for 24 hours on test pieces from the compression moulded films.

Table 2

| Ex | Inherent Viscosity | DSC Data Tm | DSC Data Tg | Film | $CH_2Cl_2$ Uptake (24 hr immersion) wt % increase |
|---|---|---|---|---|---|
| 9 | 0.94 | 406 | 205 | opaque/brittle | 3.5 |
| 10 | 0.88 | 402 | 201 | opaque/brittle | 4.0 |
| 11 | 0.91 | 393 | 206 | opaque/brittle | 4.8 |
| 12 | 0.90 | 384 | 205 | opaque/tough | 5.6 |
| 13 | 0.84 | 368 | 204 | opaque/tough | 7.0 |
| 14 | 0.81 | 363 | 207 | opaque/tough | 13.3 test piece warped |
| 15 | 0.94 | 362 (broad) | 205 | opaque/tough | 25.0 test piece warped |
| 16 | 0.78 | 360-350 (broad) | 206 | opaque/tough | 26.5 test piece warped |
| 17 | 0.77 | 360-340 (v broad) | 205 | opaque/tough | 27.3 test piece warped |
| 18 | 0.94 | - | 208 | clear/tough | 39.6 test piece warped |

Example 19

The procedure described in Example 1 was repeated but the

reaction was carried out at 300°C for 3 hours instead of 320°C for 2½ hours.

A creamy-white polymer was obtained in greater than 96% yield. Its IV was 0.77.

A DSC study of the polymer showed 368°C, Tg 206°C and Tc 305°C.

Powdered polymer compression moulded at 410°C for 3 minutes with a pressure of 4400 $MN/M^2$ then slowly cooled, gave a moderately tough opaque straw coloured film.

Samples of the film immersed in methylene dichloride at 20°C for 24 hours showed an increase in weight of 8.5%. No visible effect of attack by methylene chloride was evident and the film remained moderately tough.

Example 20

The procedure used in Example 1 was repeated using 0.085g ($0.0337 \times 10^{-2}$ mole) of 4,4'-difluorodiphenyl sulphone instead of 4,4'-dichlorodiphenylsulphone.

A creamy-white polymer was obtained in greater than 96% yield. Its IV was 0.81.

A DSC study of the polymer showed Tm 368°C, Tg 206°C and Tc 286°C.

Powdered polymer compression moulded at 410°C for 3 minutes with a pressure of 4400 $MN/m^2$, then slowly cooled, gave a moderately tough opaque straw coloured film.

Samples of the film immersed in methylene chloride at 20°C for 2 hours showed an increase in weight of 7.8%.

Example 21

The procedure used in Example 1 was repeated using 0.91 g ($0.339 \times 10^{-2}$ mole) of 4-chloro-4'-hydroxydiphenylsulphone (20.7 mol %) instead of 1.0 g ($0.373 \times 10^{-2}$ mole). 0.08 g ($0.0317 \times 10^{-2}$ mole) of 4,4'-difluorodiphenyl sulphone was used instead of 4,4'-dichlorodiphenylsulphone. A creamy-white polymer was obtained in greater than 96% yield. Its IV was 0.77.

A DSC study of the polymer showed Tm 372°C, Tg 209°C and Tc 300°C.

Powdered polymer compression moulded at 410°C for 3 minutes

with a pressure of 4400 $MN/m^2$, then slowly cooled, gave a tough opaque light brown coloured-film.

Samples of the film were immersed in methylene chloride at 20°C for 24 hours showed an increase in weight of 6.8%.

Example 22

The procedure described in Example 1 was repeated using 4.12 g ($1.337 \times 10^{-2}$ mole) of 4-(4-chlorobenzoyl)-4'-hydroxybiphenyl (77.9 mol %) instead of 4.0 g and 0.88 g of a polyarylethersulphone (22.1 mol %) having a reduced viscosity in N,N-dimethylformamide of 0.41, instead of 4-chloro-4'-hydroxydiphenylsulphone. 1.527 g ($1.82 \times 10^{-2}$ mole) of sodium bicarbonate was used but the quantities of 4,4'-dichlorodiphenylsulphone and diphenyl sulphone remained unchanged. The reaction was carried out at 300°C for 3 hours instead of 320°C for 2½ hours.

A creamy-white polymer was obtained in greater than 96% yield. Its IV was 0.87.

A DSC study of the polymer showed Tm 372°C, Tg 209°C and Tc 293°C.

Powdered polymer compression moulded at 410°C for 3 minutes with a pressure of 4400 $MN/m^2$, then slowly cooled, gave a tough opaque light brown coloured film.

Samples of the film immersed in methylene chloride at 20°C for 24 hours showed an increase in weight of 9.5%.

Example 23

The procedure described in Example 8 was repeated with the addition of 0.02g ($0.014 \times 10^{-2}$ mole) of cuprous oxide. The reaction was carried out at 320°C for 2 hours. After treatment with acetone, but before treating with water and methanol, the powder was treated with a 0.05 M aqueous solution of ethylene diamine tetraacetic acid (EDTA) to remove copper residues. The treatment with EDTA solution was affected by stirring with 200 $cm^3$ of EDTA solution twice at ambient temperature (20°C) for 30 minutes, then once at 60°C for 30 minutes. The powder was then treated with water and methanol as in Example 8.

A creamy-white polymer was obtained in greater than 96% yield. Its IV was 1.33.

0232019
H33740

A DSC study of the polymer showed Tm 374°C, Tg 209°C and Tc 283°C.

Powdered polymer compression moulded at 410°C for 3 minutes with a pressure of 4400 $MN/m^2$, then slowly cooled, gave a tough opaque light brown coloured film.

Samples of the film immersed in methylene chloride at 20°C for 24 hours showed an increase in weight of 10.0%.

Example 24

3.95 g ($1.351 \times 10^{-2}$ mole) of 4-(4-fluorobenzoyl)-4'-hydroxybiphenyl (77.6 mole %), 1.05 g ($0.391 \times 10^{-2}$ mole) of 4-chloro-4'-hydroxydiphenylsulphone (22.4 mole %), 0.07 g ($0.028 \times 10^{-2}$ mole) of 4-chloro-diphenylsulphone, 1.553 g ($1.850 \times 10^{-2}$ mole) of sodium bicarbonate and 20g of diphenyl sulphone were reacted at 320°C for 2½ hours as described in Example 1.

A creamy-white polymer was obtained in greater than 96% yield. Its properties are set out in Table 3 below.

Examples 25 to 29

A series of copolymers were prepared incorporating differing proportions of 4-(4-fluorobenzoyl)-4'-hydroxy biphenyl (A) and 4-chloro-4'-hydroxydiphenyl sulphone (B). For these copolymers and that of Example 24 Table 3 lists the molar amounts of monomers used along with the amount of sodium bicarbonate. 4-chlorodiphenylsulphone was also added in an amount of 1.6 mole % based on monomers charged.

Table 3

| Example | Mole of A | Mole %A | Mole of B | Mole %B | Mole of $NaHCO_3$ |
|---|---|---|---|---|---|
| 24 | $1.351 \times 10^{-2}$ | 77.6 | $0.391 \times 10^{-2}$ | 22.4 | $1.850 \times 10^{-2}$ |
| 25 | $1.403 \times 10^{-2}$ | 80.7 | $0.335 \times 10^{-2}$ | 19.3 | $1.841 \times 10^{-2}$ |
| 26 | $1.285 \times 10^{-2}$ | 73.4 | $0.466 \times 10^{-2}$ | 26.6 | $1.857 \times 10^{-2}$ |
| 27 | $1.231 \times 10^{-2}$ | 70.2 | $0.522 \times 10^{-2}$ | 29.8 | $1.861 \times 10^{-2}$ |
| 28 | $1.117 \times 10^{-2}$ | 65.2 | $0.595 \times 10^{-2}$ | 34.8 | $1.866 \times 10^{-2}$ |
| 29 | $1.095 \times 10^{-2}$ | 62.0 | $0.671 \times 10^{-2}$ | 38.0 | $1.875 \times 10^{-2}$ |

The polymerization and procedure and work-up procedure were identical with those of Example 1.

Table 4 shows the thermal properties, films characteristics and solvent uptake of these copolymers. The films produced in Examples 25 to 27 were compression moulded at 430°C whilst the films for examples 28 and 29 were compression moulded at 400°C. The methylene chloride immersion data were obtained at 20°C for 24 hours on test pieces from the compression moulded films.

Table 4

| Example | Inherent Viscosity | DSC Date Tm °C | DSC Date Tg °C | Film | $CH_2Cl_2$ Uptake (24 hrs immersion) wt % increase |
|---|---|---|---|---|---|
| 24 | 0.73 | 390 | 215 | opaque/brittle | 5.9 |
| 25 | 0.76 | 400 | 210 | opaque/brittle | 4.3 |
| 26 | 0.98 | 387 | 214 | opaque/brittle | 7.1 |
| 27 | 0.84 | 381 | 211 | opaque/brittle | 12.6 sample warped |
| 28 | 0.91 | 367 | 212 | opaque/tough | 32.1 sample warped |
| 29 | 0.98 | - | 212 | clear/tough | 43.1 sample warped |

Figures 1-4

The NMR spectra of the polymers produced in Example 8 and 24 were obtained as follows.

Proton decoupled carbon-13 NMR spectra were taken on a JEOL FX 270 NMR spectrometer operating at 67.8 MHz for carbon-13 nuclei. The polymers were dissolved in concentrated sulphuric acid to give solutions of concentration about 10% w/v. Field/frequency locking was provided by a 5 mm outside diameter NMR tube containing $d_6$-dimethyl sulphoxide, this tube being placed concentrically inside a 10 mm

outside diameter NMR tube containing the polymer solution under investigation. The central resonance of the $d_6$-dimethyl sulphoxide in the NMR spectrum was used as a reference for the chemical shift data and was taken as 39.6 ppm.

The following instrument conditions were used:-

Pulse width 20 microseconds (90° tip)

Acquisition time 0.5 seconds.

Spectral width 16000 Hz.

Pulse delay 0.1 second.

The number of accumulated scans for each polymer was in excess of 30,000 and 16 K data points were fourier transformed, with line broadening normally zero.

Example 30

100g ($3.24 \times 10^{-1}$ mole) of 4-(4-chlorobenzoyl)-4'-hydroxy biphenyl (72.0 mol %), 29.3 g of polyethersulphone (28.0 mol %) having RV in N,N-dimethylformamide of 0.41, 2.3g ($0.0801 \times 10^{-1}$ mole) of 4,4'-dichlorodiphenyl sulphone, 40.1g ($4.8 \times 10^{-1}$ mole) of sodium bicarbonate and 450g of diphenyl sulphone were charged to a 1-litre flanged flask fitted with nitrogen inlet, thermocouple inlet, gas outlet and a metal stirrer. The flask and contents were heated by an isomantle with a thermocouple positioned between the flask and isomantle to control the temperature.

As the flask was heated melting occurred over a 30 minute period to give an orange solution. Carbon dioxide and water were evolved at 160°C. The upper outer surface of the flask was heated by a hot-air blower to assist in the removal of water from the system.

The contents were heated to 200-210°C and held for 30 minutes before slowly increasing the reaction solution temperature (over a 30 minute period) to 315-320°C. The temperature was maintained in this range for 1½ hrs under nitrogen and with constant stirring. After this time the flask flange lid was removed and the contents poured onto a sheet of aluminium.

The resulting fawn coloured "toffee" rapidly solidified on cooling. The work-up procedure to obtain polymer from the toffee was similar to that described in Example 1.

The product, a creamy white polymer was obtained in over 96%

yield. Its IV was 0.62.

A DSC study of the polymer showed Tm 363°C, Tg 205°C and Tc 274°C.

Powdered polymer compression moulded at 420°C for 3 minutes with a pressure of 4400 $MN/m^2$, then slowly cooled, gave a thin moderately tough opaque straw coloured film.

Samples of the film immersed in methylene chloride ($CH_2Cl2$) at 20°C for 24 hours showed a weight increase of 8.9%. No visible effect of methylene chloride was evident and the film remained tough.

Example 31

The procedure of Example 30 was repeated subject to the following differences:

Unit mole ratio 77.8 : 22.2

Polyethersulphone quantity 21.4g

Sodium bicarbonate 37.1g

The product had RV 0.66 (IV 0.63), Tm 374°C, Tg 200°C, Tc 285°C. It was more crystalline than the Example 30 product and showed a weight increase of only 4.1% in the methylene chloride test.

Example 32

Samples of polymer powder from Examples 30 and 31 were blended with diphenylsulphone in a 1:3 weight ratio by tumbling in a closed container.

The mixture thus prepared was used to impregnate continuous carbon fibres according to the following procedure, which is described in EP-A-56703.

(1) Anisotropic laminate

9 collimated tows of continuous carbon fibre ("Magnamite" AS-4 supplied by Hercules Inc of Delaware, USA), each tow containing about 12000 individual fibres (filaments) were drawn at a rate of 200 mm/minute over a series of stationary guide bars to provide a band of width about 50 mm having a tension of about 50 kg. When the fibres had been guided into contiguous relationship they were pulled over a series of 4 fixed heated cylindrical bars of 12.6 mm diameter maintained at 400°C. The powder mixture of polymer and diphenyl sulphone was fed to the nip formed between the carbon fibre band and the first fixed cylindrical bar. The powder melted rapidly to provide

a melt pool in the nip which impregnated the fibre band passing over the bar. The structure was passed over and under the three further heated bars without the addition of further of the polymer mixture. Provision was made for extracting the fumes of diphenyl sulphone which were evolved. The product obtained was a continuous tape 50 mm wide and about 0.125 mm thick containing 72-73 by weight of the carbon fibre which had been well wetted by the polymer.

(a) 16 thicknesses of the tape were laid up to give uniaxial alignment of the carbon fibre in a laminate of thickness about 2 mm by compression moulding at 420°C for 5 minutes at an applied pressure of 10 $MN/m^2$. This laminate was cooled at about 15°C per minute to about 80°C and subjected to mechanical testing. The results are shown in Table 1.

Table 1

| | Example 31 | Example 32 |
|---|---|---|
| Flexural Strength, $MN/m^2$ (ASTM D790-80, 100 mm span) | 1329 | 1597 |
| Transverse flexural strength, $MN/m^2$ (ASTM D790-80, 40 mm span) | 99 | 61 |
| Short beam shear strength, $MN/m^2$ (ASTM D2344-72, 5:1 ratio of span to sample thickness) | 80 | 76 |

(b) A 4-ply uniaxial laminate made in the same way was tested over a range of temperature by means of a du Pont Dynamic Mechanical Analyser. In this test the Transverse Modulus is measured by pressing perpendicularly upon the plane of 10 x 12.3 mmm rectangular sample, the greater dimension being perpendicular to the fibres. It was found that 90% of the modulus was retained at up to 185°C.

(2) Quasi-isotropic laminates

Impregnated tape was prepared from Example 30 polymer by the method of (1) above, but with a polymer: DPS ratio of 1.5:1, 25 collimated tows, a fibre content 68% by weight and a draw rate of 350 mm/minute. 16 thicknesses of the tape were laid up such that the carbon fibres in each layer were oriented at 45° to the carbon fibres in the adjacent layers above and below, then united as in (1) above,

possibly with annealing at 300°C. Samples of the laminates were subjected to various impacts and an ultrasonic method was used to determine the area of damage (delamination) caused by the impact. The results are set out in Table 2.

Table 2

| Impact energy, J | Damage Area $cm^2$ | |
|---|---|---|
| | as moulded | annealed |
| 4 | 1.48 | 1.48 |
| 7 | 2.86 | 2.86 |
| 10 | 5.27 | 5.27 |

(In this test the impact was by a falling a dart 12.7 mm in diameter onto a 75 mm square specimen resting, unclamped, on a 50 mm diameter support ring, as described by C J Hooley and S Turner, Mechanical Testing of Plastics, Institute of Mechanical Engineers, June/July 1979, Automotive Engineer).

Claims

1. A polymer which contains repeating units

I - PhCOPhPh - and

II - $PhSO_2Ph$ - .

(where Ph is para-phenylene) linked by ether linkages, and has an inherent viscosity of at least 0.4

2. A polymer as claimed in claim 1 which contains 76 to 80 or 65 to 72, mole % of units I relative to the total of units I and II.

3. A polymer as claimed in claim 1 or claim 2. which is (i) crystalline; (ii) can be formed into a tough film by compression moulding; (iii) gains of not more than 10% by weight on immersion for 24 hours in methylene chloride at 20°C; (iv) has a glass transition temperature over 200°C; and (v) has a melting temperature below 400°C.

4. A polymer as claimed in any one of claims 1 to 3 whereof the carbon-13 NMR spectrum shows different relative intensities of the resonances in the regions of the spectrum of chemical shift 200 to 204 ppm; 164 to 169 ppm; 158 to 162 ppm; 151 to 155 ppm and 147 to 150 ppm.

5. A polymer composition comprising a polymer as claimed in any one of claims 1 to 4 and/or such a polymer modified by forming, on the polymeric chains, terminal ionic groups - A - X where A is an anion selected from sulphonate, carboxylate, sulphinate, phosphonate, phosphate, phenate and thiophenate, and X is an alkali metal or an alkaline earth metal, together with at least one additive selected from inorganic and organic fibrous fillers, organic and inorganic fillers, nucleating agents, and stabilisers, and which, if the fibrous filler is essentially continuous, is the product obtained by passing fibre through a molten mixture containing said polymer and/or modified polymer.

6. A shaped article formed from a polymer as claimed in any one of claims 1 to 4 and/or from a modified polymer or composition as defined in claim 5.

7. A process for the preparation of a polymer which comprises polycondensing, under substantially anhydrous conditions, at least one compound of

$Y^1PhCOPhPhY^2$

with at least one compound

$Y^3PhSO_2PhY^4$

and/or with a polyarylethersulphone having repeating units

$- PhSO_2Ph -$

in which polyarylethersulphone the repeating units are linked by ether linkages, where

Ph is para-phenylene; and

$Y^1$, $Y^2$, and, when present $Y^3$ and $Y^4$ are each, independently, halogen or - OH, and are such that the halogen and -OH are in substantially equimolar amounts

at a temperature in the range 150 to 400°C, in the presence of at least one alkali metal hydroxide, carbonate or bicarbonate in a stoichiometric amount or up to 25% with respect to the phenolic groups in the compounds $Y^1PhCOPhPhY^2$ and to the repeat units $-PhSO_2Ph-$ of the polyarylethersulphone: characterised by at least one of the features

(a) at least the last stage of the polycondensation is effected at a temperature of at least 300°C;

(b) the presence of a copper containing catalyst; and

(c) carrying out said polycondensation at such a temperature, for such a time and with such molecular weight control by non-stochiometric reactants that an intermediate polymer of low or moderate molecular weight is produced and thereafter in one or more subsequent stages increasing the molecular weight to a desired level.

8. A process according to claim 7 (c) in which the molecular weight of the intermediate polymer corresponds to an IV in the range 0.4 to 0.6 and is increased to a level corresponding to an IV of at least 0.7, or in which the molecular weight of the intermediate polymer corresponds to an IV in the range 0.3 to 0.5 and is increased to a level over 0.6.

9. A process as claimed in claim 7 or claim 8 in which the compound $Y^1PhCOPhPhY^2$ is 4-(4-chlorobenzoyl)-4'-hydroxybiphenyl and is polycondensed with 4-chloro-4'-hydroxy-diphenylsulphone and/or an

essentially equimolar mixture of 4,4'-dichlorodiphenylsulphone and 4,4'-dihydroxydiphenylsulphone and/or with a polyarylethersulphone.

10. A process as claimed in claim 7 (c) in which the intermediate polymer has end groups selected from groups of formula

- Ar - $X^1$, and

- Ar - OD

where Ar is arylene, preferably phenylene,

$X^1$ is a monovalent radical capable of nucleophilic displacement from Ar, preferably selected from halogen, nitrile (CN) or nitro ($NO_2$) radicals; and

D is a univalent metal

which comprises mixing that polymer with a reagent having nucleophilic activity selected from a) alkaline salts of Group I and Group II metals and b) reagents having radicals $-X^1$ and -OD, reactive respectively with the end groups -Ar-OD and $-Ar-X^1$, wherein

(i) when the group is $-Ar-X^1$ the reagent is difunctional having either both end groups -OD or one -OD and one $-X^1$ group; and

(ii) when the end group is -Ar-OD the reagent is difunctional having both end groups $-X^1$; and heating the mixture to a temperature above the melting point of the polymer until a desired increase in molecular weight has occurred.

H33740/DGJS2/JF

0232019

1/3

Fig. 1.

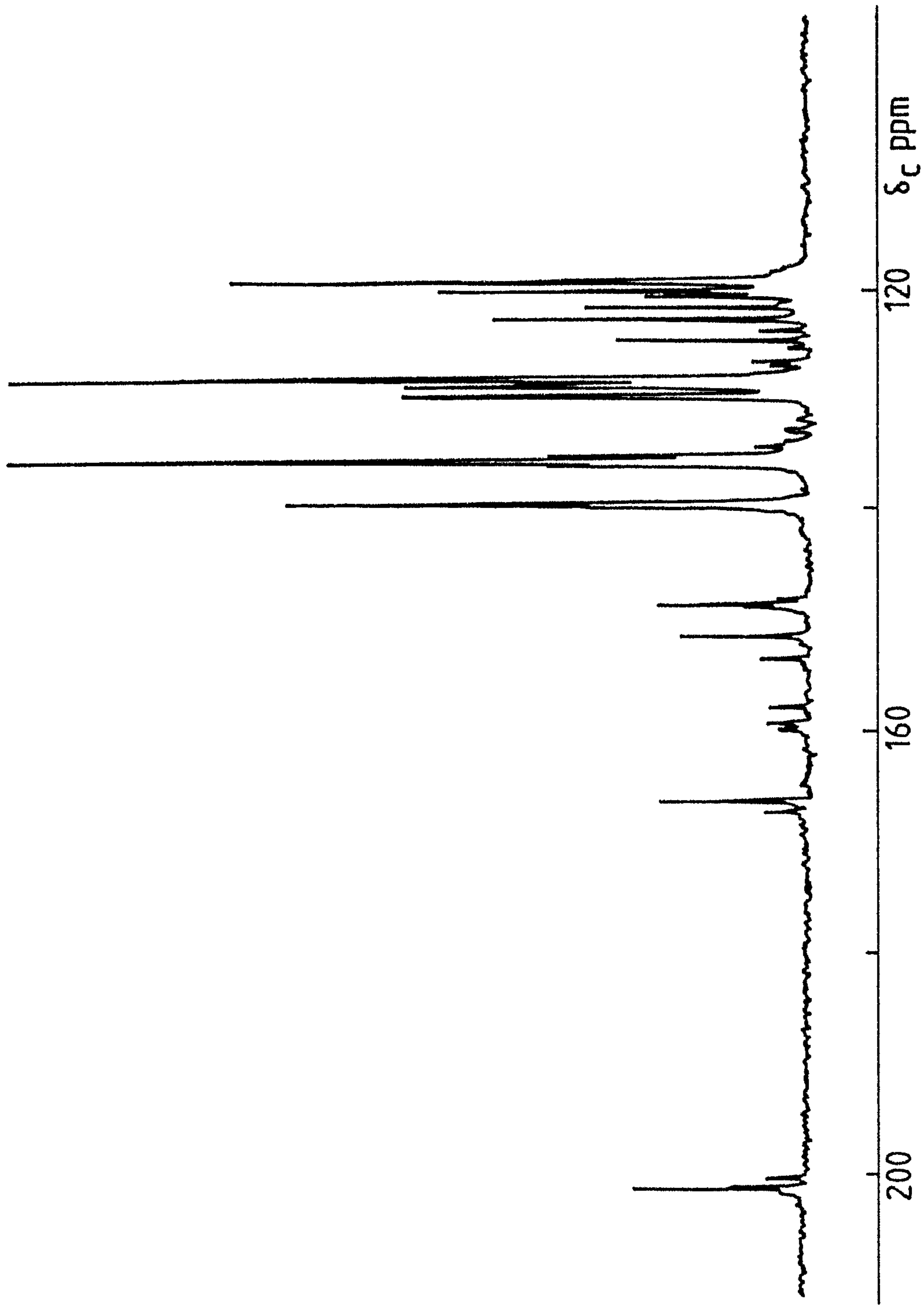

Fig.2.

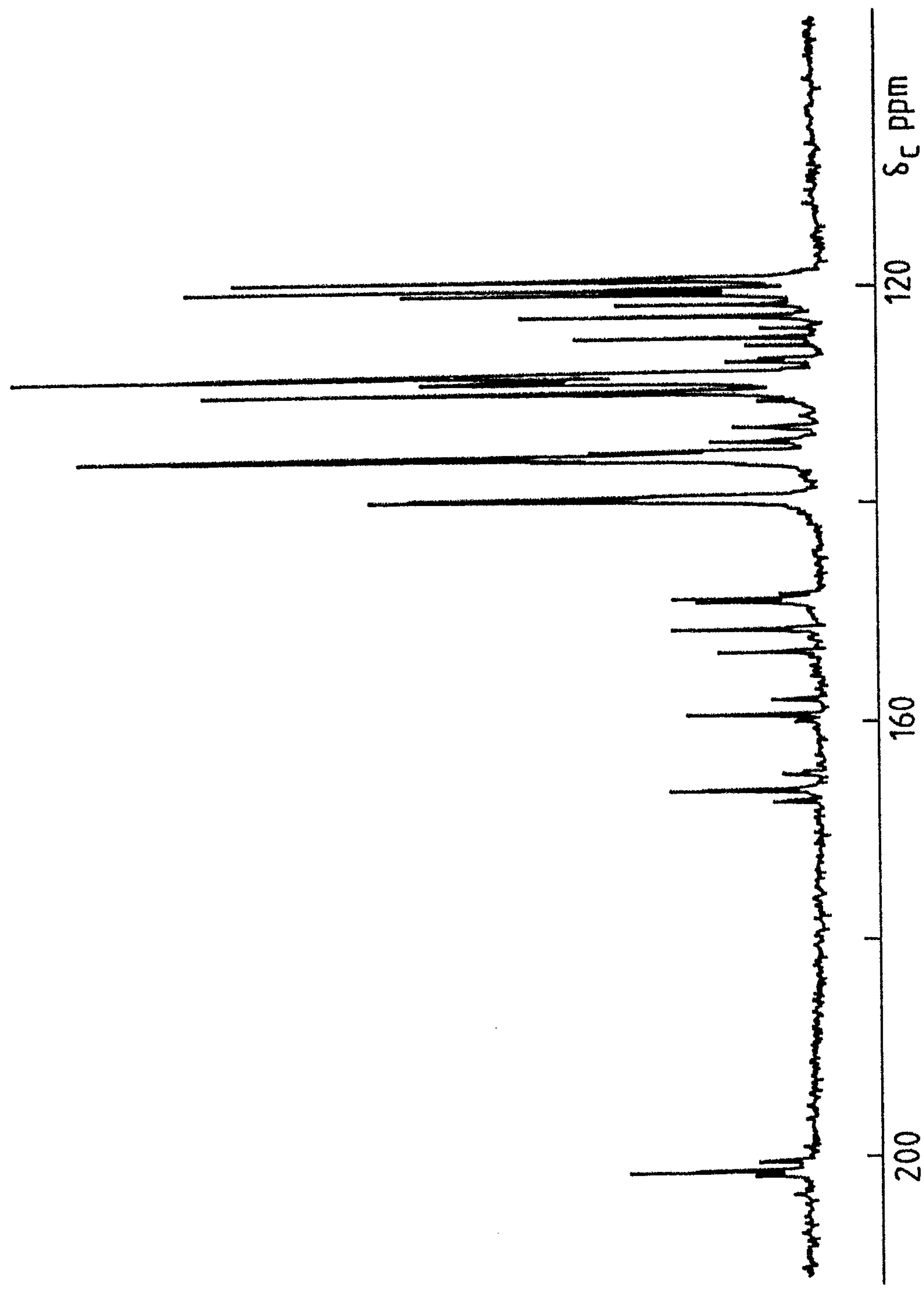

Fig. 3.

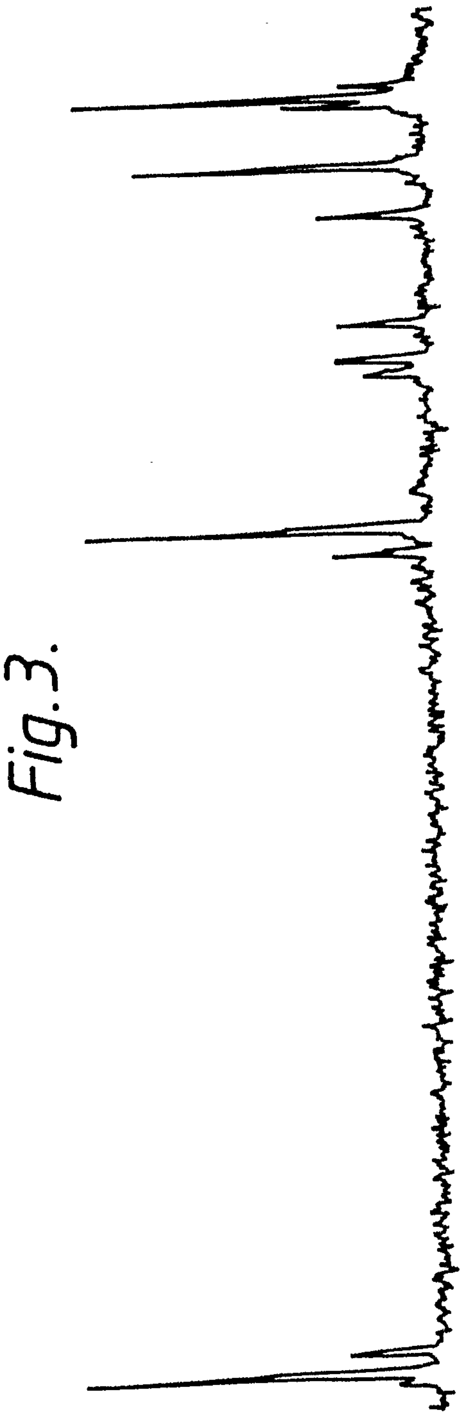

Fig. 4.